Europäisches Patentamt

European Patent Office

Office européen des brevets

(11) Veröffentlichungsnummer: **0 092 633**
A2

(12) # EUROPÄISCHE PATENTANMELDUNG

(21) Anmeldenummer: 83100187.0

(22) Anmeldetag: 12.01.83

(51) Int. Cl.³: **F 16 J 15/36**

(30) Priorität: 24.04.82 DE 3215458

(43) Veröffentlichungstag der Anmeldung:
02.11.83 Patentblatt 83/44

(84) Benannte Vertragsstaaten:
AT DE FR GB IT NL

(71) Anmelder: GOETZE AG
Bürgermeister-Schmidt-Strasse 17
D-5093 Burscheid 1(DE)

(72) Erfinder: Vossieck, Paul
Dürscheid 4
D-5093 Burscheid(DE)

(72) Erfinder: Stüttem, Heinz
Dierath 50
D-5093 Burscheid(DE)

(54) Gleitringdichtung.

(57) Bei einer Gleitringdichtung, die im wesentlichen aus einem gegebenenfalls verstärkten Halteteil und einem sich daran anschließenden Balgen besteht, sind zum Zwecke der Drehmomentsicherung das Halteteil und der Balgen miteinander verbunden, dergestalt, daß Ansätze des Halteteiles in korrespondierende Ausnehmungen im Balgen eingreifen.

FIG. 3

EP 0 092 633 A2

- 1 -

Gleitringdichtung.

Die Erfindung betrifft eine Gleitringdichtung, bestehend aus einem winkelförmigen Halteteil und einem sich vom Axialschenkel desselben im wesentlichen radial erstreckenden Balgen, der den Gleitring an mindestens einer Umfangsfläche und einer Stirnfläche umgreift.

Durch das deutsche Gebrauchsmuster 1.850.250 sowie die GB - PS 644.185 sind bereits Gleitringdichtungen der angesprochenen Gattung bekannt. Sie bestehen im wesentlichen aus einem winkelförmigen versteiften Halteteil, von dessen Axialschenkel ausgehend sich ein Balgen im wesentlichen radial in Richtung auf einen Gleitring erstreckt und diesen im Bereich einer Stirnfläche und einer Umfangsfläche umgreift. Zwischen dem Versteifungsring und dem Balgen erstreckt sich eine die notwendige Axialkraft aufbringende Druckfeder. Nachteile beider Gleitringdichtungen sind darin zu sehen, daß sie bei extremen Situationen, also zum Beispiel beim Festfressen des Gleitringes am korrespondierenden Maschinenteil nach längerer Standzeit oder dergleichen, das auftretende Drehmoment nicht sicher übertragen können und somit eine Beschädigung oder gar ein Abreißen des Balgens die Folge sein kann.

Zur sicheren Übertragung des Drehmomentes zwischen einzelnen Teilen der Gleitringdichtung wurden ebenfalls bereits eine Reihe von Vorschlägen gemacht. Einer ist zum Beispiel in dem deutschen Gebrauchsmuster 1.722.008 offenbart. Die Gleitringdichtung besteht in ähnlicher Weise wie die vorab beschriebenen aus einem versteiften Halteteil, einem Balgen, einem Gleitring und einer Druckfeder. Der Halteteil weist einen Kragen auf, welcher als Verdrehsicherung in den Gleitring

- 2 -

eingreift. Abgesehen von der aufwendigen und relativ teuren Bauweise kann diese Art der Drehmomentsicherung bei der vorab beschriebenen Gleitringdichtung keine Anwendung finden, da der Gleitring in dem angesprochenen Bereich mit einer Elastomerschicht versehen ist, die in einen Wulst zur besseren Anlage des einen Federendes ausläuft.

Der Erfindung liegt somit die Aufgabe zugrunde, ausgehend vom gattungsbildenden Teil des Hauptpatentanspruches, eine gute Übertragung des Drehmomentes zwischen dem den Gleitring tragenden Balgen und dem Halteteil zu gewährleisten, ohne die Kosten der Gleitringdichtung wesentlich zu erhöhen.

Diese Aufgabe wird erfindungsgemäß dadurch gelöst, daß der Balgen und das Halteteil zur sicheren Übertragung des Drehmomentes miteinander verbunden sind. Durch diese Maßnahme wird eine Beschädigung des Balgens vermieden. Eine Reihe von Möglichkeiten bietet sich an, um die Verbindung herzustellen. Zum einen könnte ein separater Verbindungskörper verwendet werden, zum anderen - und das ist eine bevorzugte Lösung - könnte die Verbindung durch mindestens einen am Radialschenkel des Halteteiles angeformten Ansatz erfolgen, der in Richtung auf den Balgen weist und in mindestens eine korrespondierende Ausnehmung des Balgens eingreift. Ist der Halteteil des Balgens entsprechend seiner Form durch einen winkelförmigen Versteifungsring verstärkt, so kann die Verbindung durch mindestens einen am Radialschenkel des Versteifungsringes angeformten Ansatz erfolgen, der in mindestens eine korrespondierende Ausnehmung im Balgen eingreift. Je nach Anwendungsfall kann es sinnvoll sein, den Axialansatz nochmals mit einer radialen Abbiegung oder einem elastomeren Wulst zu versehen.

- 3 -

Einem weiteren Gedanken der Erfindung gemäß ist der den Gleitring an zwei Seiten umgreifende Balgen hinter dem Gleitring
axial in Richtung auf den Radialschenkel des Halteteiles
beziehungsweise des Versteifungsringes verlängert, wobei die
radiale Wandstärke des verlängerten Teiles mindestens der
radialen Wandstärke des Gleitringes entspricht. Vorzugsweise
verjüngt sich der verlängerte Teil, jedoch ohne daß dabei
die vorab angesprochenen Maßverhältnisse geändert werden.

Es wird weiterhin vorgeschlagen, daß die bereits angesprochene
Ausnehmung beziehungsweise die Ausnehmungen im Balgen in diesem sich konisch verjüngenden Teil vorgesehen sind. Sie erstrecken sich axial vorzugsweise bis nahe an den Gleitring
heran. Der beziehungsweise die Ansätze am Radialschenkel des
Halteteiles beziehungsweise des Versteifungsringes greifen
- wie schon angesprochen - in die Ausnehmungen im konischen
Teil des Balgens ein, wobei sie jedoch in axialer Richtung
in diesen verschiebbar sind. Durch die Verschiebbarkeit kann
bei Gleitringdichtungen ohne Feder gegebenfalls der durch
das axiale Zusammendrücken vorgespannte Balgen die axiale
Anpreßkraft für den Balgen voll übernehmen. Ist dies nicht
erwünscht, kann natürlich auch eine Feder, wie sie im Stand
der Technik beschrieben worden ist, verwendet werden. Die
Ansätze am Halteteil beziehungsweise am Versteifungsring
sind hierbei vorzugsweise wulstförmig ausgebildet, um eine
gewisse Steifigkeit des gesamten Systemes zu gewährleisten.

Einem weiteren Gedanken der Erfindung gemäß kann es unter
bestimmten Voraussetzungen beziehungsweise Betriebsbedingungen
sinnvoll sein, eine zusätzliche Drehmomentsicherung zwischen
dem Balgen und dem Gleitring vorzusehen. Diese könnte einerseits darin bestehen, daß die Umfangsfläche des Gleitringes

- 4 -

und / oder die korrespondierende Umfangsfläche des Balgens mit in axialer Richtung verlaufenden Riefen oder Rillen versehen werden. Des weiteren besteht aber auch die Möglichkeit, die Drehmomentsicherung im Bereich der einander zugewandten Stirnflächen des Gleitringes und / oder des Balgens anzuordnen. Dazu kann die eine und / oder die andere Fläche derart profiliert werden, daß die auf beiden Seiten gebildeten Erhebungen beziehungsweise Ausnehmungen mit korrespondierenden Ausnehmungen beziehungsweise Erhebungen zusammenwirken. Sollte sich im Bereich zwischen dem Balgen und dem Radialschenkel des Halteteiles beziehungsweise des Versteifungsringes eine die axiale Anpreßkraft für den Gleitring bewirkende Druckfeder befinden, so könnte diese so ausgelegt werden, daß sie den Teil des Balgens unter radialer Vorspannung übergreift, der mit dem Gleitring zusammenwirkt.

Die Erfindung ist in der Zeichnung dargestellt und wird im folgenden näher beschrieben. Es zeigen:

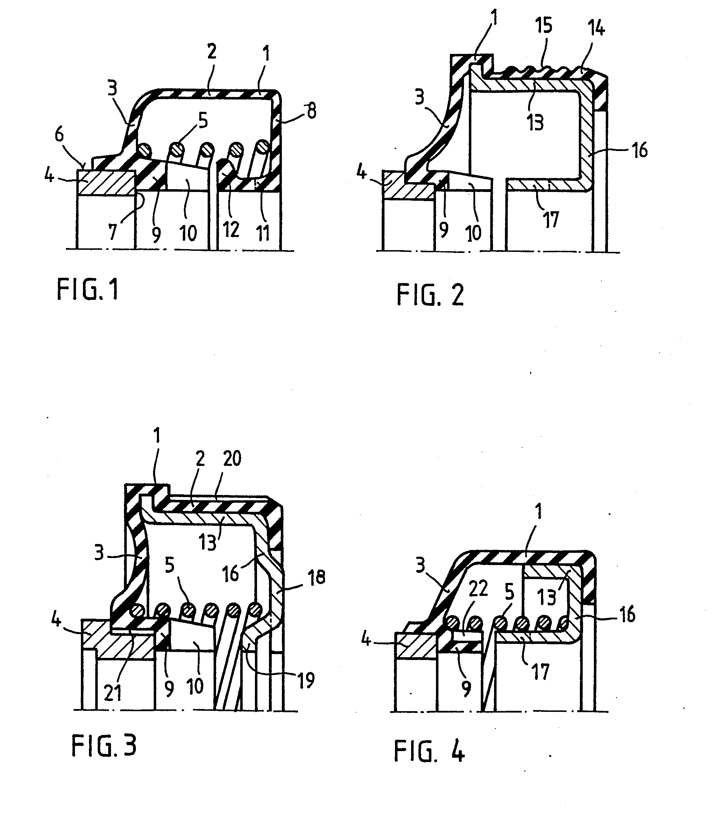

Figuren 1 bis 4   Unterschiedliche konstruktive
Ausbildungen von Gleitringdichtungen gemäß der
Erfindung

Die Gleitringdichtung gemäß Figur 1 besteht aus einem winkelförmigen elastomeren Halteteil 1, einem sich von seinem Axialschenkel 2 im wesentlichen radial erstreckenden Balgen 3, einem Gleitring 4 und einer Druckfeder 5. Der Balgen 3 umgreift den Gleitring 4 an seiner äußeren Umfangsfläche 6 und an der Stirnfläche 7. Die Feder 5 erstreckt sich axial zwischen dem Balgen 3 und dem Radialschenkel 8 des Halteteiles 1. Somit besteht die Gleitringdichtung aus lediglich drei

Teilen, die auf einfache Weise ineinandersteckbar sind. Da dieses im wesentlichen aus Elastomermaterial bestehende System nicht sehr formstabil ist, ist es in der vorab beschriebenen Form nicht in der Lage, größere Drehmomente zu übertragen, ohne daß Beschädigungen am Balgen 3 auftreten. Aus diesem Grund ist eine Drehmomentsicherung zwischen dem Balgen 3 und dem Halteteil 1 vorzusehen. Die Drehmomentsicherung wird hergestellt, indem der Balgen 3 axial hinter dem Gleitring 4 verlängert und dieser Teil 9, in Umfangsrichtung gesehen, mit mehreren, sich radial von einer zur anderen Umfangsfläche erstreckenden Ausnehmungen versehen wird. Am Radialschenkel 8 des Halteteiles 1 sind entsprechend der Anzahl der Ausnehmungen 10 axiale Ansätze 11 angeformt, die in Wülste 12 auslaufen. Wird die Gleitringdichtung nun in eine nicht weiter dargestellte Aufnahmebohrung eingebracht, werden die Ausnehmungen 10 axial in Richtung auf die Wülste 12 verschoben. Zum einen wird auf diese Weise die Feder 5 axial vorgespannt und ist nun in der Lage, die axiale Vorspannung auf den Gleitring 4 auszuüben, und zum anderen wird der axial verlängerte Teil 9 des Balgens 3 verdrehsicher mit dem Ansatz 11 des Halteteiles verbunden.

Die Gleitringdichtungen gemäß den Figuren 2 bis 4 bestehen im wesentlichen aus den gleichen Teilen wie die aus Figur 1. Es gelten daher die gleichen Bezugsziffern.

Figur 2 zeigt eine Gleitringdichtung ohne Feder. Die axiale Vorspannung für den Gleitring 4 wird beim axialen Zusammendrücken der Gleitringdichtung durch den Balgen 3 aufgebracht. Der Halteteil 1 der Gleitringdichtung ist durch einen Versteifungsring 13 versteift. Auch diese Gleitringdichtung besteht lediglich aus drei ineinandersteckbaren Teilen. Zum

- 6 -

Zweck der besseren Haftung in der nicht weiter dargestellten Aufnahmebohrung ist die äußere Umfangsfläche 14 mit einem Wellenprofil 15 versehen. Am Radialschenkel 16 des Versteifungsringes 13 sind mehrere Ansätze 17 vorgesehen, die in Richtung auf den Balgen 3 weisen und dort, ähnlich wie in Figur 1, in korrespondierende Ausnehmungen 10 im axial verlängerten Teil 9 des Balgens 3 nach dem Einbau der Gleitringdichtung eingreifen. Natürlich kann die Gleitringdichtung auch so ausgelegt werden, daß die Ansätze 17 auch während Transport und Lagerung in den korrespondierenden Ausnehmungen 10 eingreifen, um somit gegebenenfalls auftretende Beschädigungen der Gleitringdichtung zu vermeiden.

Figur 3 ist ähnlich wie Figur 2 zu sehen, mit dem Unterschied, daß der Versteifungsring 13 eine andere Form aufweist, und daß wieder eine Feder 5 vorgesehen ist. Der Radialschenkel 16 des Versteifungsringes 13 ist mit einer etwa U - förmigen umlaufenden Sicke 18 versehen. Wie schon vorab beschrieben, sind mehrere, axial und radial gerichtete Ansätze 19, ausgehend von der Sicke 18, am Radialschenkel 16 angeformt, die in korrespondierende Ausnehmungen 10 des axial verlängerten Teiles 9 des Balgens 3 eingreifen. Zum Zwecke der besseren Aufnahme in einer nicht weiter dargestellten Aufnahmebohrung ist der Axialschenkel 2 des Halteteiles 1, in Umfangsrichtung gesehen, mit einer Vielzahl von axial umlaufenden Rillen 20 versehen. Zusätzlich zur Drehmomentsicherung zwischen Balgen 3 und Versteifungsring 13 ist eine Drehmomentsicherung zwischen dem Balgen 3 und dem Gleitring 4 vorgesehen. Diese besteht, wie auch beim Halteteil 1, aus im axial verlängerten Teil 9 des Balgens verlaufenden axialen Rillen 21. Die Feder, die diesen Teil 9 und somit auch den Gleitring 4 teilweise übergreift, ist so ausgelegt, daß sie eine radiale Vorspannung auf die beiden Teile 9,4 ausübt.

Figur 4 ist ähnlich Figur 1 zu sehen, mit dem Unterschied, daß das winkelförmige Halteteil 1 durch einen winkelförmigen Versteifungsring 13 verstärkt ist. Am Radialschenkel 16 des Versteifungsringes 13 sind mehrere, in Richtung des Balgens 3 weisende Ansätze 17 vorgesehen, die in Taschen 22 im axial verlängerten Teil 9 des Balgens 3 eingreifen. Die Feder 5 liegt im wesentlichen auf den Ansätzen 17 auf.

- 1 -

Patentansprüche:

1. Gleitringdichtung, bestehend aus einem winkelförmigen Halteteil und einem sich vom Axialschenkel desselben im wesentlichen radial erstreckenden Balgen, der den Gleitring an mindestens einer Umfangsfläche und einer Stirnfläche umgreift, dadurch gekennzeichnet, daß der Balgen ( 3 ) und das Halteteil ( 1 ) zur sicheren Übertragung des Drehmomentes miteinander verbunden sind.

2. Gleitringdichtung nach Anspruch 1, dadurch gekennzeichnet, daß die Verbindung durch mindestens einen am Radialschenkel ( 8 ) des Halteteiles ( 1 ) angeformten, axial in Richtung auf den Balgen ( 3 ) weisenden Ansatz ( 11 ) erfolgt, der in mindestens eine korrespondierende Ausnehmung ( 10,22 ) im Balgen ( 3 ) eingreift.

3. Gleitringdichtung, wobei das winkelförmige Halteteil durch einen ebenfalls winkelförmigen Versteifungsring verstärkt ist, nach Anspruch 1, dadurch gekennzeichnet, daß die Verbindung durch mindestens einen am Radialschenkel ( 16 ) des Versteifungsringes ( 13 ) angeformten, axial in Richtung auf den Balgen ( 3 ) weisenden Ansatz ( 17 ) erfolgt, der in mindestens eine korrespondierende Ausnehmung ( 10,22 ) im Balgen ( 3 ) eingreift.

4. Gleitringdichtung nach den Ansprüchen 1 bis 3, dadurch gekennzeichnet, daß der den Gleitring ( 4 ) umgreifende Balgen ( 3 ) axial in Richtung auf den

- 2 -

Radialschenkel ( 8,16 ) des Halteteiles ( 1 ) beziehungsweise des Versteifungsringes ( 13 ) verlängert ist.

5. Gleitringdichtung nach den Ansprüchen 1 bis 4, dadurch gekennzeichnet, daß die radiale Wandstärke des axial verlängerten Balgenteiles ( 9 ) mindestens der radialen Wandstärke des Gleitringes ( 4 ) entspricht.

6. Gleitringdichtung nach den Ansprüchen 1 bis 5, dadurch gekennzeichnet, daß sich die axiale Verlängerung ( 9 ) in Richtung auf den Radialschenkel ( 8,16 ) des Halteteiles ( 1 ) beziehungsweise des Versteifungsringes ( 13 ) konisch verjüngt.

7. Gleitringdichtung nach den Ansprüchen 1 bis 6, dadurch gekennzeichnet, daß sich die Ausnehmung ( 10, 22 ) beziehungsweise die Ausnehmungen im konischen Teil ( 9 ) des Balgens ( 3 ) befinden.

8. Gleitringdichtung nach den Ansprüchen 1 bis 7, dadurch gekennzeichnet, daß sich die Ausnehmung ( 10, 22 ) beziehungsweise die Ausnehmungen axial bis nahe an den Gleitring ( 4 ) erstrecken.

9. Gleitringdichtung nach den Ansprüchen 1 bis 8, dadurch gekennzeichnet, daß der beziehungsweise die Ansätze ( 11,17 ) des Halteteiles ( 1 ) beziehungsweise des Versteifungsringes ( 13 ) axial verschiebbar in der beziehungsweise den Ausnehmungen ( 10, 22 ) im Balgen ( 3 ) angeordnet sind.

10. Gleitringdichtung nach den Ansprüchen 1 bis 9, dadurch gekennzeichnet, daß der beziehungsweise die Ansätze ( 11 ) wulstförmig ( 12 ) ausgebildet sind.

11. Gleitringdichtung nach den Ansprüchen 1 bis 10, gekennzeichnet durch eine zusätzliche Drehmomentsicherung zwischen dem Gleitring ( 4 ) und dem Balgen ( 3 ).

12. Gleitringdichtung nach Anspruch 11, dadurch gekennzeichnet, daß in die Umfangsfläche des Balgens und / oder in die Umfangsfläche des Gleitringes axial verlaufende Riefen oder Rillen ( 21 ) eingebracht sind.

13. Gleitringdichtung nach Anspruch 11, dadurch gekennzeichnet, daß die dem Balgen ( 3 ) zugewandte Stirnfläche des Gleitringes ( 4 ) und / oder die korrespondierende Stirnfläche des Balgens ( 3 ) profiliert ist.

14. Gleitringdichtung nach Anspruch 13, gekennzeichnet durch, in Umfangsrichtung gesehen, alternierende Ausnehmungen beziehungsweise Erhöhungen im Bereich der Stirnflächen.

FIG.1

FIG. 2

FIG.3

FIG. 4